# EUROPÄISCHE PATENTANMELDUNG

(11) **EP 1 113 558 A2**
(43) Veröffentlichungstag der Anmeldung: **04.07.2001**
(21) Anmeldenummer: 00128572.5
(22) Anmeldetag: 27.12.2000
(51) Int. Cl.: H02H 7/22

(54) **Relais mit Überstromschutz**

(30) Priorität: 28.12.1999 DE 19963504
(71) Anmelder: TYCO Electronics Logistics AG, 9323 Steinach (CH)
(72) Erfinder: Polese, Angelo, 10557 Berlin (DE); Berndt, Ernst-Ulrich, 13469 Berlin (DE)
(74) Vertreter: Hirsch, Peter, Dipl.-Ing.

(57) **Zusammenfassung**

Als Laststrom-Sensor zum Schutz eines Relais vor Überlast beziehungsweise Kurzschluß dient die vorhandene Erregerwicklung 2 des Elektromagnetsystems 1 des Relais. Ein Abschnitt 5 im Laststromkreis wird, beispielsweise in Form eine Zusatzwicklung, so angeordnet, daß ein im Lastkreis fließender Strom in den Erregerkreis eine Spannung induziert und der Erregerspannung überlagert. In einer Elektronik wird dieses Signal ausgewertet und bei Überschreiten einer Laststromschwelle wird das Relais abgeschaltet.

## Beschreibung

Die Erfindung betrifft ein Relais mit Überstromschutz mit einem Erregerkreis und einem Laststromkreis, wobei mit dem Laststromkreis ein Meßsystem gekoppelt ist, das bei Überschreitung einer vorgegebenen Laststromschwelle den Erregerkreis abschaltet. Die Überwachung bzw. Begrenzung des Laststromes dient dabei vorwiegend dem Schutz der Relaiskontakte bzw. des Relais sowie der Leitungen und Stecksysteme des Lastkreises gegen Überlast und Kurzschluß.

Eine bekannte Möglichkeit, den Laststrom zu begrenzen, ist aus Gebrauchsmuster 29720249.9 entnehmbar. Dabei ist seitlich am Relais eine steckbare Schmelzsicherung angebracht, die in Serie in den Lastkreis geschaltet ist, und bei Überstrom den Lastkreis unterbricht.

In der Patentschrift DE 19636932 C-1 ist ein Relais mit Überlastschutz offenbart, bei dem der Überstromschutz mittels eines Kaltleiters realisiert ist, welcher in Serie in den Lastkreis geschaltet ist. Bei Auftreten eines Überstroms beziehungsweise eines Kurzschlusses wird dieser Kaltleiter sprungartig hochohmig und unterbricht dadurch den Lastkreis.

Desweiteren ist eine Schaltungsanordnung mit Überlastschutz für ein Relais bekannt aus der europäischen Patentanmeldung 0829939 A-2. Hierbei findet ebenfalls ein Kaltleiter Verwendung, der allerdings in Serie in den Erregerstromkreis eines Relais geschaltet ist, und der durch einen Heizabschnitt im Laststromkreis des Relais beheizbar ist. Bei Auftreten einer Überlast wird der Kaltleiter über seine Sprungtemperatur erhitzt, er wird hochohmig und läßt das Relais abfallen, so daß der Laststromkreis unterbrochen wird. Das Dokument offenbart einen Stromsensor in einem Lastkreis, der bei Überschreitung einer vorgegebenen Laststromschwelle den Erregerkreis abschaltet.

Aus der europäischen Patentschrift 0231793 B-1 ist ein elektromagnetisches Relais bekannt, bei dem ein Stromzuführungselement des Laststromkreises mit mindestens einer Windung um einen Teil des Erregerflußkreises geführt wird, so daß in diesem eine Zusatzerregung gleichsinnig zu der Erregung der Wicklung erzeugt wird. Auf diese Weise wird auch bei Relais ein sicheres Ansprechen gewährleistet, bei denen hohe Ströme für den Lastkreis von der gleichen Spannungsquelle entnommen werden, die auch die Erregerspannung liefert.

Die ersten drei oben zitierten Druckschriften zeigen jeweils eine Möglichkeit auf, ein Relais mit Überstromschutz zu realisieren. Ihnen ist jedoch der Nachteil gemeinsam, daß sie jeweils im Lastkreis zusätzliche Elemente erfordern, wie beispielsweise Sicherungen, Heizelemente oder Kaltleiter. Das Verwenden einer Schmelzsicherung hat darüber hinaus den Nachteil, daß diese nach einem Ansprechen ausgetauscht werden muß.

Das Dokument EP 0231793 B-1 offenbart eine Rückkopplung des Laststromes in den Erregerkreis mittels mindestens einer zusätzlichen Windung des Lastkreises um einen Teil des Erregerflußkreises. Dies dient hierbei allerdings nicht dem Schutz des Relais vor Überstrom, sondern soll auch dann ein sicheres Ansprechen des Relais gewährleisten, wenn Erregerwicklung und Laststromkreis von der gleichen Spannungsquelle gespeist werden und ein hoher Einschaltstrom des Lastkreises zu einem zusammenbrechen der Spannung an der Erregerwicklung führt. Nachteilhaft ist die fehlende galvanische Trennung von Lastund Erregerseite.

Ziel der vorliegenden Erfindung ist es, ein Relais mit Überstromschutz zu schaffen, ohne daß dabei zusätzliche Bauteile im Lastkreis erforderlich sind. Die Überwachung beziehungsweise Begrenzung des Stroms durch die Relaiskontakte soll nicht durch externe Schutzmaßnahmen realisiert sein. Außerdem soll die galvanische Trennung zwischen Erregerstromkreis und Laststromkreis des Relais gewahrt sein.

Erfindungsgemäß wird dieses Ziel mit einem elektromechanischen Relais erreicht, welches folgende Merkmale aufweist:
- ein Elektromagnetsystem mit einer Erregerwicklung,
- einen Schaltkontakt in einem Lastkreis, der mittels des Elektromagnetsystems betätigbar ist,
- mindestens einen Leiterabschnitt im Lastkreis, der bezüglich der Erregerwicklung derart angeordnet ist, dass ein bei Ansprechen des Relais fließender Laststrom in der Erregerwicklung ein Spannungssignal induziert,
- eine Elektronik, in der dieses Spannungssignal ausgewertet wird, und die in den Erregerstromkreis einwirkt.

Die vorhandene Erregerspule des Relais kann ohne Veränderungen gleichzeitig als Sensor für Überstrom im Lastkreis verwendet werden. Die Leiterbahnen des Lastkreises müssen derart angeordnet sein, daß eine Einkopplung in die Relaisspule erfolgt. Dem im Erregerstromkreis fließenden DC-Erregerstrom wird bei geschlossenem Relais-Schaltkontakt ein AC-Anteil überlagert, da ein im Lastkreis fließender Wechselstrom in diese Erregerspule eine Spannung induziert. Diese induzierte Spannung ist abhängig vom Strom im Lastkreis und kann deshalb als Indikator für Überstrom im Lastkreis verwendet werden. Hierzu wird die induzierte Spannung, beispielsweise mit einem Kondensator, aus dem Erregerkreis ausgekoppelt und mit einem Verstärker verstärkt. Somit besteht die Möglichkeit, das Relais bei Überschreiten einer einstellbaren Schwelle bezüglich des Laststroms elektronisch abzuschalten. Ein Vorteil dieser Erfindung ist es, daß im Lastkreis keine zusätzlichen Bauelemente zum Schutz des Relais vor Überlast oder Kurzschluß erforderlich sind. Beim konstruktiven Aufbau des Relais ist lediglich darauf zu achten, die geometrische Anordnung der Laststromanschlüsse beziehungsweise des Lastkreises so zu gestalten, daß das Feld des Laststroms in die Erregerspule einkoppeln kann. Ein weiterer Vorteil des erfindungsgemäßen Relais ist es, daß die galvanische Trennung von Erregerstromkreis und Laststromkreis erhalten bleibt.

In einer vorteilhaften Ausführung der Erfindung wird die Einkopplung des Laststroms in den Erregerstromkreis dadurch verstärkt, daß im Lastkreis eine Einkoppelschleife enthalten ist, die beispielsweise nahe am Anker des Relais angebracht ist.

In einer weiteren vorteilhaften Ausführung wird eine Zusatzwicklung um die Relaisspule gelegt, die in den Lastkreis geschaltet ist und eine besonders starke Einkopplung des Laststroms in den Erregerkreis ermöglicht.

In einer vorteilhaften Ausführungsform der Erfindung wird das Relais dadurch gebildet, daß die Elektronik außen auf einer Relaiskappe angeordnet ist. Leiterbahnen auf der Relaiskappe können beispielsweise dadurch hergestellt werden, daß die Relaiskappe in MID- (moulded interconnect device-) Technik gebildet ist, oder durch Galvanisieren und Strukturieren mittels Laser oder Ätzen.

Gegenstand einer weiteren, vorteilhaften Ausführungsform der Erfindung ist es, die Elektronik nicht im oder am Relais selbst anzuordnen, sondern diese extern, beispielsweise auf der das Relais tragenden Leiterplatte, unterzubringen.

Schließlich ermöglicht die Auswertung des in dem Erregerkreis induzierten, vom Laststrom hervorgerufenen Spannungssignals, das Relais genau zum Zeitpunkt des Stromnulldurchgangs zu schalten und somit den Kontaktabbrand an den Lastkontakten zu minimieren.

Weitere Einzelheiten und Ausgestaltungen der Erfindung sind in den Unteransprüchen angegeben.

Die Erfindung wird nachfolgend an einem Ausführungsbeispiel anhänd der Zeichnungen näher erläutert.

### Es zeigt:

Figur 1 die prinzipielle Schaltungsanordnung eines erfindungsgemäßen Relais in einem Blockschaltbild,

Figur 2 ein Oszillogramm des Erregerstroms mit vom Laststrom induzierten AC-Anteil.

Figur 3 ein erfindungsgemäßes Relais mit einer Einkopplungsschleife

Figur 4 einen Schaltplan eines Relais mit Überstromschutz

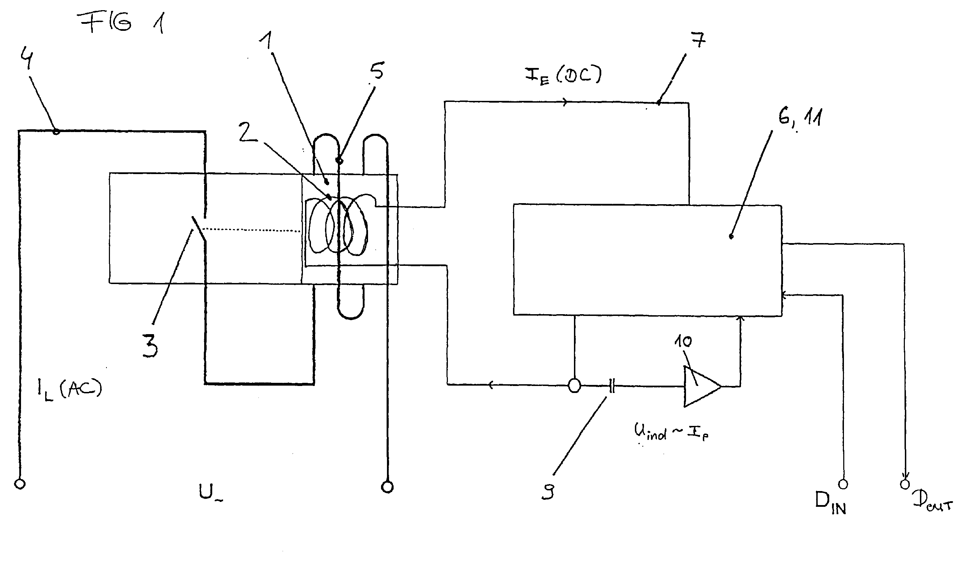

Figur 1 zeigt ein erfindungsgemäßes elektromechanisches Relais mit einem Elektromagnetsystem 1 mit einer Erregerwicklung 2. Mittels dieses Elektromagnetsystems 1 ist ein Schaltkontakt 3 betätigbar , der in einem Lastkreis angeordnet ist. Dieser Lastkreis 4 ist ein Wechselstromkreis. Auf der Erregerseite des Relais ist an der Erregerwicklung 2 ein Erregerstromkreis 7 angeschlossen. Fließt nun im Erregerstromkreis 7 ein Erregerstrom, der ein Gleichstrom ist, so betätigt das Elektromagnetsystem 1 den Schaltkontakt 3 derart, daß im Lastkreis 4 ein Laststrom, der ein Wechselstrom ist, zu fließen beginnt. Aufgrund der erfindungsgemäßen Anordnung eines Abschnittes 5 in diesem Lastkreis induziert der Laststrom in der Erregerwicklung eine Spannung, die dem DC-Erregerstrom überlagert wird. Dieses induzierte Spannungssignal hängt dabei bezüglich Amplitude, Phasenlage und Frequenz vom Laststrom ab. Eine Auswertung dieses induzierten Spannungssignals 8 läßt somit Rückschlüsse zu auf den Laststrom selbst. Hier für wird der induzierte Wechselanteil aus dem Erregerstromkreis ausgekoppelt. Dies kann beispielsweise mit einem Kondensator 9 geschehen. Falls erforderlich, wird dieses Signal mittels eines Verstärkers 10 verstärkt, bevor es in einem Mikroprozessor 11 verarbeitet wird. Bei Überschreitung einer einstellbaren Laststromschwelle wird das Relais elektronisch abgeschaltet. Die Abschaltschwelle ist beispielsweise über eine Controllerschaltung und zum Beispiel über ein Bussystem einstellbar. Ebenfalls ist es denkbar, diese Abschaltschwelle mittels einer Schaltung aus analogen externen Bauelementen zu realisieren.

In Figur 1 ist die Ausführung des Abschnitts 5 im Lastkreis 4, über die die Einkopplung des Laststroms in den Erregerstromkreis 7 erfolgt, beispielsweise als Zusatzwicklung um die Relaisspule 2 angedeutet. Eine Einkopplung des Lastkreises in den Erregerstromkreis ist aber auch denkbar mit einer Einkoppelschleife, die beispielsweise nahe am Anker des Relais angebracht werden kann. Bei geeigneter Konstruktion kann sogar der Stromfluß durch einen oder mehrere Lastanschlüsse allein hinreichend sein für die Rückkopplung des Laststroms in den Erregerkreis.

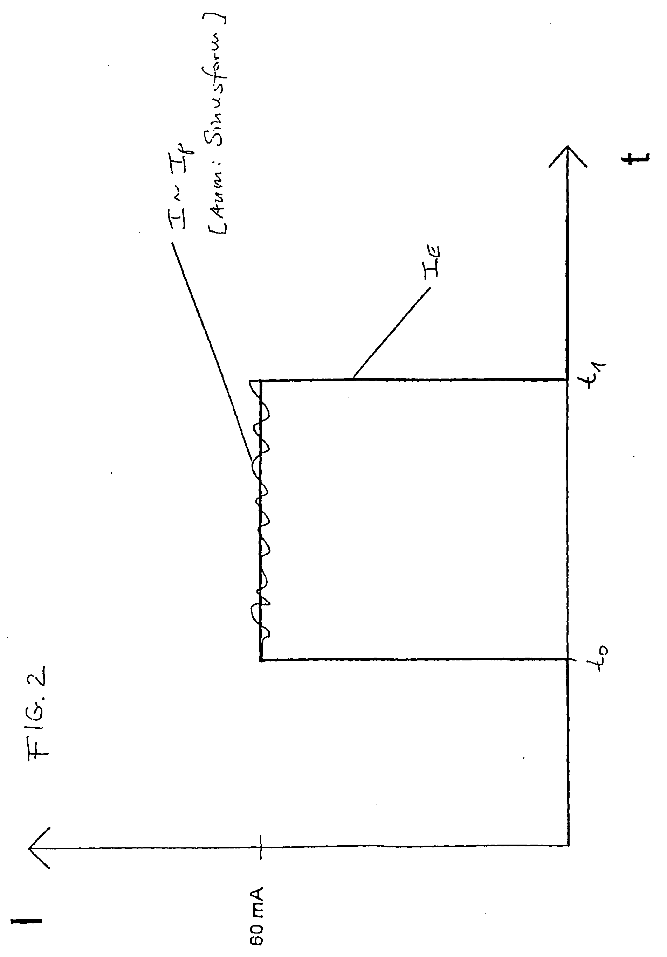

In Figur 2 ist der Stromverlauf im Erregerstromkreis 7 über der Zeit aufgetragen. Dieser setzt sich zusammen aus einem Erregerstrom, der ein Gleichstrom ist, und einen Wechselstromanteil, der über die Erregerwicklung aus dem Lastkreis induziert wird. Die Zeitpunkte t0 und t1 kennzeichnen den Einbzw. Ausschaltzeitpunkt des Relais.

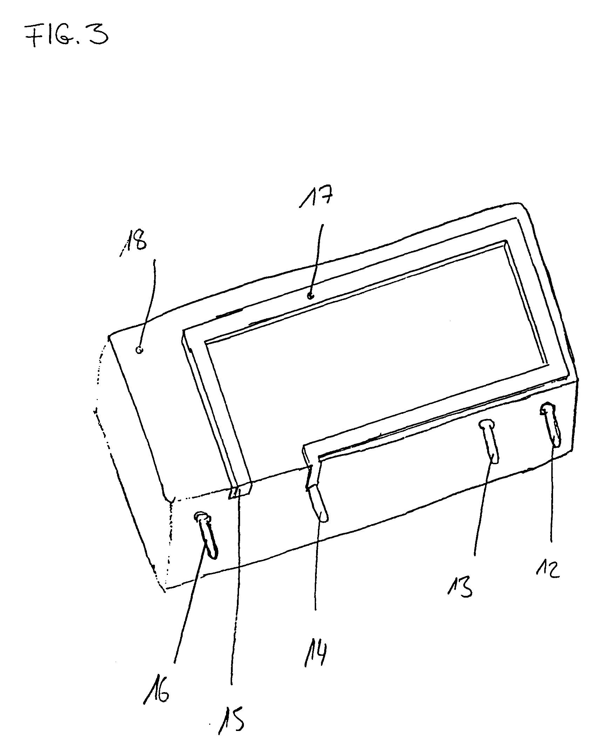

Figur 3 zeigt ein Ausführungsbeispiel der vorliegenden Erfindung, wobei um die Erregerwicklung 2 des Elektromagnetsystems 1 keine Zusatzwicklung angebracht ist, sondern lediglich eine Einkoppelschleife 17 außen am Relaisgehäuse, in Serie im Lastkreis, angeordnet ist. Diese Anordnung, die hier beispielhaft an einem herkömmlichen Netzrelais gezeigt ist, reicht bereits aus, um ein AC-Signal auswertbarer Intensität aus dem Laststromkreis 4 in den Erregerstromkreis 7 einzukoppeln. Die zur Weiterverarbeitung dieses induzierten Spannungssignals erforderliche Auswerte-Elektronik ist in Figur 3 nicht dargestellt.

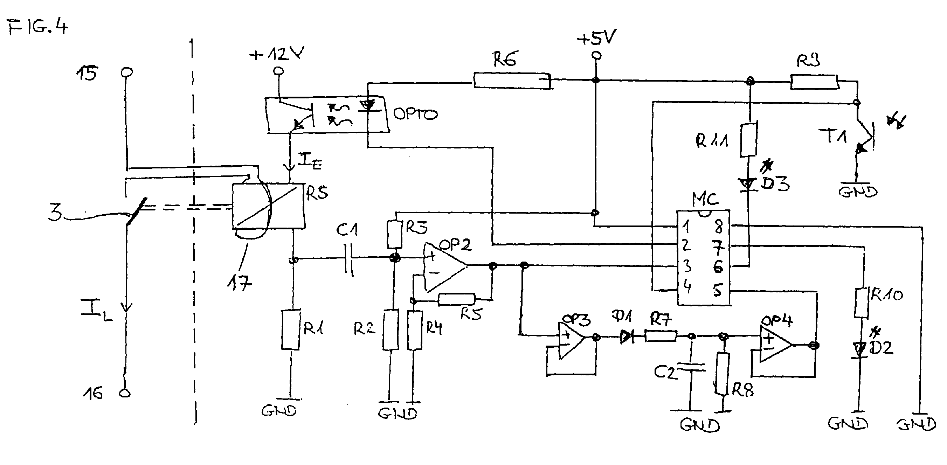

Figur 4 zeigt einen Schaltplan für ein elektromagnetisches Relais mit Überstromschutz. Um das Relais RS ist eine Einkoppel-Schleife 17 herumgelegt, wie in Figur 3 beispielhaft ausgeführt. Das Relais wirkt auf einen Lastkontakt 3, der in Serie zur Einkoppelschleife 17 im Lastkreis angeordnet ist. An die Lastkontakte 15, 16 ist die zu schaltende Last anschließbar. Bei geschlossenem Relaiskontakt 3 fließt der Laststrom IL über die Einkoppel-Schleife 17. Die erregerseitige Stromversorgung des Relais erfolgt über einen Optokoppler sowie einen Widerstand R1 (100 Ohm). Der Optokoppler wird über einen Mikrocontroller MC angesteuert. Am Widerstand R1 fällt nun eine Spannung ab, deren AC-Anteil proportional zum Laststsrom IL ist. Folglich ist die Erregerwicklung 2 des Relais RS zugleich eine Sensorspule für den Laststrom. Über den Kondensator C1 (100 Nanofarad) wird der AC-Anteil aus dem Erregerstromkreis ausgekoppelt und dem Operationsverstärker OP2 zugeführt. Mittels der Widerstände R3 (50 Kiloohm) und R2 (1 Kiloohm) wird eine geringe Vorspannung erzeugt. Über die Widerstände R4 (10 Kiloohm) und R5 (100 Kiloohm) ist eine negative Rückkopplung eingerichtet. Nach einer ca. zehnfachen Verstärkung des induzierten AC-Signals im Operationsverstärker OP2 wird dieses dem Pin 3, der ein AD-Wandler-Eingang eines Mikrocontrollers MC ist, zugeführt.

Mit den Operationsverstärkern OP3 und OP4 sowie der Diode Dl und dem Kondensator C2 wird eine optionale Mittelwertbildung des induzierten Spannungssignals realisiert. Die Operationsverstärker OP3 und OP4 dienen dabei jeweils der Pufferung des Signals. Mit Diode D1 wird das Signal gleichgerichtet und an C2 steht eine geglättete Spannung zur Verfügung. Außerdem wird ein Vorschaltwiderstand R7 (100 Ohm) sowie ein Widerstand R8 (50 Kiloohm) benötigt. Das mit dieser zusätzlichen analogen Glättungsschaltung gewonnene Signal wird dem Pin 8 des Mikrocontrollers MC zugeleitet. Dieser stellt ebenfalls einen AD-Wandler-Eingang des Mikrocontrollers dar. Bei einer Frequenz des Laststroms von 50 Hz kann der Mikrocontroller mit einer typischen Wandlungszeit von 40µs bis zu 500 Messungen pro Periode zur Spitzenwerterkennung des Laststroms ausführen oder den analog erzeugten Mittelwert auswerten. Mit dem Mikrocontroller können softwaremäßig beispielsweise die folgenden Funktionen realisiert werden:

Glätten, Spitzenwertberechnung, Berechnung eines Trends, entstören, Fast-Fourier-Transformation (FFT), Grenzwertüberwachung.

Wenn der Mikrocontroller MC beispielsweise einen Strom mißt, der über einem definierten Grenzwert liegt, kann beispielsweise das Relais deaktiviert werden. Damit ist ein Überstromschutz des Relais realisiert. Ein Wiedereinschalten des Relais ist hardwareseitig nicht automatisch vorgesehen. Mit dem Widerstand R9 und dem Infrarot-Empfänger T1 verfügt der Mikrocontroller über einen Infrarot-Eingang beziehungsweise über eine Schnittstelle zu einem Steuerungsrechner, und über den Widerstand R10 sowie die Infrarot-Diode D2 über eine Infrarot-Ausgangs-Schnittstelle. Hierdurch können in einfacher Weise Grenzwerte vorgegeben sowie Stromdaten an einen Leitrechner weiter gegeben werden. An den Pin 6 des Mikrocontrollers ist eine weitere Leuchtdiode angeschlossen, über die beispielsweise ein Störungssignal ausgegeben werden kann. Die mit Empfänger T1 und Sender D2 realisierte optische Schnittstelle kann in einfacher Weise, ebenfalls über optische Sende- und Empfangselemente, an einer herkömmlichen RS 232-Schnittstelle eines PC angeschlossen werden.

Um den Verschleiß an den Relais-Lastkontakten zu reduzieren, ist es erfindungsgemäß in einfacher Weise möglich, mit dem Mikrocontroller den Stromnulldurchgang im Laststrom IL zu detektieren und den Laststrom vorteilhafterweise im Stromnulldurchgang abzuschalten.

## Patentansprüche

1. Elektromechanisches Relais, das folgende Merkmale aufweist:
- ein Elektromagnetsystem (1) mit einer Erregerwicklung (2),
- einen Schaltkontakt (3) in einem Lastkreis (4), der mittels des Elektromagnetsystems (1) betätigbar ist,
- mindestens einen Leiterabschnitt (5) im Lastkreis (4), der bezüglich der Erregerwicklung (2) derart angeordnet ist, dass ein bei Ansprechen des Relais fließender Laststrom in der Erregerwicklung (2) ein Spannungssignal (8) induziert,
- eine Elektronik (6), in der dieses Spannungssignal (8) ausgewertet wird, und die in den Erregerstromkreis (7) einwirkt.

2. Elektromechanisches Relais nach Anspruch 1,
**dadurch gekennzeichnet**,
daß der Leiterabschnitt eine Zusatzwicklung (5) um die Erregerwicklung (2) ist.

3. Elektromechanisches Relais nach Anspruch 1,
**dadurch gekennzeichnet**,
daß der Leiterabschnitt (5) eine Einkoppelschleife ist.

4. Elektromechanisches Relais nach Anspruch 1,
**dadurch gekennzeichnet**,
daß die Elektronik (6) innerhalb eines Gehäuses des Relais angeordnet ist.

5. Elektromechanisches Relais nach Anspruch 1,
**dadurch gekennzeichnet**,
daß die Elektronik (6) in einem Modul untergebracht ist, welches an das Gehäuse ansteckbar ausgeführt ist.

6. Elektromechanisches Relais nach Anspruch 1,
**dadurch gekennzeichnet**,
daß die Elektronik (6) außen auf einer Kappe des Relais angeordnet ist.

7. Elektromechanisches Relais nach Anspruch 6,
**dadurch gekennzeichnet**,
daß die Kappe des Relais durch Umspritzen in einem MID-(moulded interconnect device) Verfahren hergestellt ist und auf der so ausgeführten Kappe Leiterbahnen angeordnet sind.

8. Elektromechanisches Relais nach Anspruch 6,
**dadurch gekennzeichnet**,
daß die Kappe des Relais zumindest teilweise galvanisiert ist und Leiterbahnen durch Laserstrukturieren oder Ätzen gebildet sind.

9. Elektromechanisches Relais nach einem der Ansprüche 1 bis 8,
**dadurch gekennzeichnet**,
daß die Elektronik (6) den Erregerstromkreis des Relais bei Überschreiten einer einstellbaren Laststrom-Schwelle elektronisch unterbricht.

10. Elektromechanisches Relais nach Anspruch 9,
**dadurch gekennzeichnet**,
daß die Elektronik (6) den Laststrom in dessen Strom-Nulldurchgang abschaltet.

11. Elektromechanisches Relais nach einem der Ansprüche 1 bis 10,
**dadurch gekennzeichnet**,
daß die Elektronik (6) als Mikroprozessor (11) realisiert ist, in dem das induzierte Spannungssignal (8) nach der Auskopplung aus dem Erregerstromkreis (7) mittels eines Kondensators (9) und Verstärkung mittels eines Verstärkers (10) verarbeitet wird.

12. Elektromechanisches Relais nach Anspruch 11,
**dadurch gekennzeichnet**,
daß die Elektronik über eine optische Schnittstelle mit dem Erregerstromkreis gekoppelt ist und in diesen einwirken kann.
